# EUROPÄISCHE PATENTANMELDUNG

(11) **EP 1 400 883 A2**
(43) Veröffentlichungstag der Anmeldung: **24.03.2004**
(21) Anmeldenummer: 03020281.6
(22) Anmeldetag: 08.09.2003
(51) Int. Cl.: G05B 19/42, G05B 19/418

(54) **Verfahren zur automatischen Anzeige von zusätzlichen Daten**

(30) Priorität: 20.09.2002 DE 10243849
(71) Anmelder: SIEMENS AKTIENGESELLSCHAFT, 80333 München (DE)
(72) Erfinder: Freund, Arthur, 90768 Fürth (DE)

(57) **Zusammenfassung**

Die Erfindung betrifft ein Verfahren zur automatischen Anzeige zusätzlicher Daten eines auf der Benutzeroberfläche einer Computer-Anwenderstation angezeigten Bildobjektes, welches mindestens einem Bestandteil einer technischen Prozessanlage zugeordnet ist, wobei Daten der technischen Prozessanlage (z.B. Prozess-, Zustands- Steuer- und/oder Regeldaten) an die Computer-Anwenderstation übertragen werden, mehrere der übertragenen Daten einem bestimmten Bestandteil der Prozessanlage und einem Bildobjekt auf der Benutzeroberfläche zugeordnet werden sowie die zugeordneten Daten auf der Benutzeroberfläche bei festgestellter Überdeckung eines vom Benutzer auf der Benutzeroberfläche bewegten Hinweiselements mit dem Bildobjekt der Benutzeroberfläche angezeigt werden.

## Beschreibung

Die Erfindung betrifft ein Verfahren zur automatischen Anzeige von zusätzlichen Daten mit den Merkmalen des Oberbegriffs des Patentanspruchs 1.

Der Erfindung liegt die Aufgabe zugrunde, ein Verfahren zur automatischen Anzeige von zusätzlichen Daten anzubieten, um die Bedienung für den Benutzer einer Computer-Anwenderstation zur Steuerung oder Überwachung einer technischen Prozessanlage (z.B. einer Fertigungsanlage, eines Kraftwerks, einer chemischen Anlage etc.) zu erleichtern.

Diese Aufgabe wird durch ein Verfahren mit den Merkmalen des kennzeichnenden Teils des Patentanspruchs 1 in Verbindung mit den Merkmalen des Oberbegriffs gelöst. Vorteilhafte Verfahrensvarianten werden in den Unteransprüchen 2 - 10 beschrieben.

Das erfindungsgemäße Verfahren zur automatischen Anzeige von zusätzlichen Daten eines auf der Benutzeroberfläche einer Computer-Anwenderstation abgebildeten Bildobjekts erleichtert die Bedienung für den Benutzer der Computer-Anwenderstation. Auf der Benutzeroberfläche sind zur Steuerung, Kontrolle und Überwachung der zugeordneten technischen Prozessanlage einzelne Bestandteile der technischen Prozessanlage als Bildobjekte abgebildet. Zu den einzelnen Bildobjekten sind weitere Informationen zur technischen Prozessanlage hinterlegt, welche auf von der technischen Prozessanlage an die Computer-Anwenderstation übermittelte Prozess-, Zustands-, Steuerund/oder Regeldaten beruhen.

Der Benutzer, der sich nun einen besonders schnellen Überblick über den Zustand der technischen Prozessanlage verschaffen will, kann nach dem erfindungsgemäßen Verfahren eine Anzeige von mehreren übermittelten Daten auf der Benutzeroberfläche erreichen, wenn ein vom Benutzer bewegtes Hinweiselement (z.B. ein Cursor) das abzufragende Bildobjekts zumindest teilweise überdeckt. Bei erfolgter Überdeckung erfolgt automatisch eine Anzeige der diesem Bildobjekt zugeordneten und von der technischen Prozessanlage übertragenen Daten.

Damit muss der Benutzer nicht wie üblicherweise mit dem Hinweiselement das jeweilige Bildobjekt erreichen und durch separate meist mehrfache Aktivierung (z.B. Tastaturbefehl oder Mausclick) weitere Daten abfragen.

Beim erfindungsgemäßen Verfahren wird beim reinen Bewegen des Hinweiselements durch den Benutzer über die entsprechenden Bildobjekte eine automatische Anzeige von übertragenen Daten der technischen Prozessanlage geleistet. Damit kann der Benutzer das jeweilige Hinweiselement über die Benutzeroberfläche bewegen und bekommt automatisch die jeweiligen den Bildobjekten zugeordneten Daten der technischen Prozessanlage. Insgesamt ermöglicht das erfindungsgemäße Verfahren somit eine besonders schnelle und komfortable Information des Benutzers über den Zustand der technischen Prozessanlage.

Das Hinweiselement (Cursor) kann dabei vom Benutzer durch eine Hilfseinrichtung (z.B. eine Mausvorrichtung oder eine Scroll-Einrichtung) bewegt werden.

Zur Modellierung des erfindungsgemäßen Verfahrens kann der Benutzer die Anzahl der einzelnen Bildobjekten zugeordneten Daten der technischen Prozessanlage bestimmen. Damit kann die Informationsdichte der selbsttätig in den aufscheinenden Bildobjekten angezeigten Daten beeinflusst werden.

Nach einer weiteren vorteilhaften Verfahrensvarianten kann der Benutzer auch die Auswahl der anzuzeigenden Daten variieren und somit ein auf sein persönliches Benutzerprofil und auf die Erfordernisse der technischen Prozessanlage angepasstes Informationsangebot der zusätzlich angezeigten Daten erreichen.

Zur übersichtlichen Darstellung der angezeigten zusätzlichen Daten können diese in einzelnen Flächenbereichen (z.B. Zeilen, Spalten etc.) eines sich selbsttätig öffnenden weiteren Bildobjekts angezeigt werden.

Das erfindungsgemäße Verfahren ist anhand von Ausführungsbeispielen in den Zeichnungsfiguren näher erläutert. Es zeigen:
FIG 1 eine Benutzeroberfläche mit einem Bildobjekt mit zusätzlichen Daten,
FIG 2 ein weiteres Bildobjekt mit zusätzlichen Daten sowie
FIG 3 ein weiteres Bildobjekt mit zusätzlichen Daten.

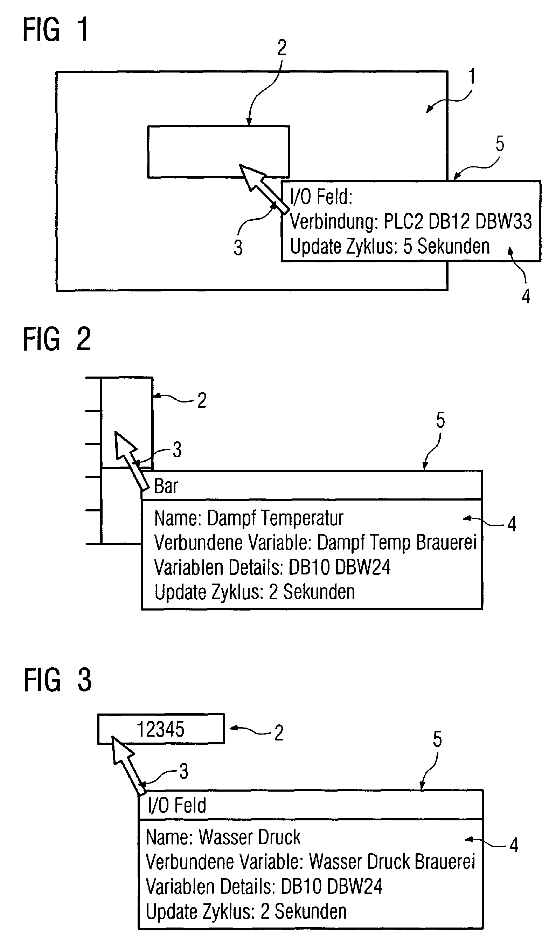

FIG 1 zeigt einen Ausschnitt einer Benutzeroberfläche 1 (z.B. eines Bildschirms) einer an sich bekannten Computer-Anwenderstation (z.B. eines Personal-Computers). Auf dieser Benutzeroberfläche 1 ist schematisch ein erstes Bildobjekt 2 abgebildet, welches bestimmten Bestandteilen einer technischen Prozessanlage (z.B. einem Ofen, einem Motor oder einer Beförderungseinrichtung etc.) zugeordnet ist. Beim Bewegen des Hinweiselements 3 (z.B. eines Cursors) und bei Überdeckung des Hinweiselements 3 mit dem Bildobjekt 2 erscheint nun automatisch eine Anzeige zusätzlicher Daten 4 in einem weiteren Bildobjekt 5. Diese Daten 4 enthalten Informationen über von der technischen Prozessanlage an die Computer-Anwenderstation übertragene Prozess-, Zustands-, Steuer- und/oder Regeldaten der technischen Prozessanlage.

In FIG 2 wird als Bildobjekt 2 als Säulendarstellung einer Druckangabe beispielhaft dargestellt. Bei Überfahren des Bildobjekts 2 gemäß FIG 2 mit dem Hinweiselement 3 erscheint das weitere Bildobjekt 5 mit den Daten 4, nämlich einer Überschrift ("Bar" als Hinweis auf eine Druckangabe) und weiteren Angaben zu den Bereichen "Name", "Connected Tag", "Tag Details" und "Update Cycle". Diese weiteren Angaben beziehen sich auf den Bestandteil der Prozessanlage, dem das Bildobjekt 1 zugeordnet ist.

FIG 3 zeigt ein als Bildobjekt 1 eine numerische Darstellung "12345"(z.B. ein Messwert oder ein Prozesswert) des Bestandteils der Prozessanlage, dem das Bildobjekt 1 zugeordnet ist.

Bei Überdeckung des Bildobjekts 2 mit dem Hinweiselement 3 erscheint das weitere Bildobjekt 5 mit den Daten 4, nämlich einer Überschrift "IO-Field" und weiteren Angaben zu den Bereichen "Name", "Connected Tag", "Tag Details" und "Update Cycle".

Die weiteren Daten 4 des Bildobjekts 5 sind in Fig. 2 und Fig. 3 in Flächenbereichen (hier Zeilen) des Bildobjekts 5 angeordnet.

## Patentansprüche

1. Verfahren zur automatischen Anzeige zusätzlicher Objektdaten eines auf der Benutzeroberfläche einer Computer-Anwenderstation angezeigten Bildobjektes, welches mindestens einem Bestandteil einer technischen Prozessanlage zugeordnet ist, **gekennzeichnet, durch** folgende Verfahrensschritte:
- Übertragung von Daten der technischen Prozessanlage (z.B. Prozess-, Zustands- Steuer- und/oder Regeldaten) an die Computer-Anwenderstation,
- Zuordnung von mehreren der übertragenen Daten zu einem bestimmten Bestandteil der Prozessanlage und zu einem Bildobjekt auf der Benutzeroberfläche sowie
- Anzeige der zugeordneten Daten auf der Benutzeroberfläche bei festgestellter Überdeckung eines vom Benutzer auf der Benutzeroberfläche bewegten Hinweiselements mit dem Bildobjekt der Benutzeroberfläche.

2. Verfahren nach Anspruch 1, **dadurch gekennzeichnet, dass** die verknüpften Daten bei festgestellter teilweiser Überdeckung des Hinweiselements mit dem Bildobjekt angezeigt werden.

3. Verfahren nach Anspruch1 oder 2, **dadurch gekennzeichnet, dass** das Hinweiselement ein Mauspfeil (Cursor) ist.

4. Verfahren nach einem der vorhergehenden Ansprüche, dadurchgekennzeichnet, dass das Hinweiselement vom Benutzer über eine Hilfseinrichtung auf der Benutzeroberfläche bewegt wird.

5. Verfahren nach Anspruch 4, **dadurch gekennzeichnet, dass** die Hilfseinrichtung eine Mausvorrichtung ist.

6. Verfahren nach Anspruch 4 oder 5, dadurch ge kennzeichnet, dass die Hilfseinrichtung eines Scroll-Einrichtung ist.

7. Verfahren nach einem der vorhergehenden Ansprüche, **dadurch gekennzeichnet, dass** die Zuordnung der Anzahl der dem Bildobjekt zugeordneten Daten einstellbar ist.

8. Verfahren nach einem der vorhergehenden Ansprüche, **dadurch gekennzeichnet, dass** die dem Bildobjekt zugeordneten Daten individuell auswählbar sind.

9. Verfahren nach einem der vorhergehenden Ansprüche, **dadurch gekennzeichnet, dass** die dem Bildobjekt zugeordneten Daten in ein weiteres Bildobjekt integriert sind.

10. Verfahren nach Anspruch 9, **dadurch gekennzeichnet, dass** das weitere Bildobjekt mehrere Flächenbereiche zur Anzeige der zugeordneten Daten aufweist.
